# EUROPEAN PATENT APPLICATION

(11) **EP 2 903 226 A1**
(43) Date of publication of application: **05.08.2015**
(21) Application number: 13791298.6
(22) Date of filing: 29.07.2013
(51) Int. Cl.: H04L 12/891

(54) **LINK AGGREGATION METHOD AND DEVICE FOR TRAFFIC DISTRIBUTION**

(30) Priority: 29.09.2012 CN 201210374942
(71) Applicant: ZTE Corporation, Shenzhen, Guangdong 518057 (CN)
(72) Inventor: WANG, Linlin, Shenzhen Guangdong 518057 (CN); MA, Yuxia, Shenzhen Guangdong 518057 (CN); FENG, Jingbin, Shenzhen Guangdong 518057 (CN)
(74) Representative: Brevalex
(86) International application number: PCT/CN2013/080343
(87) International publication number: WO 2013/170839

(57) **Abstract**

Disclosed is a link aggregation method for traffic distribution. The method comprises: when traffic is distributed according to a link quality factor of a member link in a link aggregation group, first selecting a member link with a high link quality factor to transmit a service; and after the traffic of the link with the high link quality factor reaches an upper limit, selecting a link with another link quality factor to transmit the service. The present invention further discloses a link aggregation device for traffic distribution wherein the device is a link node and used for: when traffic is distributed according to a link quality factor of a member link in a link aggregation group, first selecting a member link with a high link quality factor to transmit a service; and after the traffic of the link with the high link quality factor reaches an upper limit, selecting a link with another link quality factor to transmit the service. By adopting the present invention, the service quality of the service transmission can be improved.

## Description

### TECHNICAL FIELD

The disclosure relates to the field of data technology, and in particular to a link aggregating method and device for traffic distribution.

### BACKGROUND

In the field of Packet Transmission Networks, common link aggregation may include a Link Aggregation Control Protocol (LACP), a Multilink Peer-to-Peer Protocol (ML-PPP), a Link Capacity Adjustment Scheme (LCAS), a composite link, or the like.

With the LACP, multiple Ethernet links may be aggregated together. With the ML-PPP, multiple types of links may be aggregated together. With the LCAS, Virtual Containers (VC) of a Synchronous Digital Hierarchy (SDH) may be aggregated together, forming a wider logical link. Link aggregation with such related art is generally performed in two modes. One is a load sharing mode, where member links of a group of aggregated links are equals of each other, and traffic is shared equally by the member links. The other is a primary-secondary mode, where a group of aggregated links includes two member links, namely, a primary link and a secondary link serving to protect each other.

To sum up, in related art, in the load sharing mode, traffic is distributed equally on multiple member links, regardless of link quality; likewise in the primary-secondary mode, regardless of link quality, either link will do as long as it is available, and when a current link is unavailable, primary-secondary switching will be performed.

### SUMMARY

In view of this, an embodiment herein provides a link aggregating method and device for traffic distribution, capable of improving quality of service transfer.

To this end, a technical solution according to an embodiment herein may be implemented as follows.

A link aggregating method for traffic distribution, includes that: traffic is distributed according to a link quality factor of a member link in a group of aggregated links by first selecting a member link with a high link quality factor for performing service transfer, and then after traffic on the member link with the high link quality factor reaches an upper limit, selecting a link with a link quality factor other than the high link quality factor for performing service transfer.

The method may further include that: before the traffic is distributed according to the link quality factor of the member link in the group of aggregated links,
the group of aggregated links is created, member links included in the group of aggregated links are designated, and a link quality factor of a member link may be configured statically or dynamically.

When a link quality factor of a member link is configured statically, a link node may receive the configured link quality factor through an external command.

The link node may select a member link for performing service transfer according to a descending order of link quality factors of the member links.

When a link quality factor of a member link is to be configured dynamically, a link node may receive a performance indicator of the member link through an external command.

The method may further include that: the link node computes the link quality factor according to the performance indicator, and then select a member link for performing service transfer according to a descending order of link quality factors,

The performance indicator may include at least one of a link type, a link rate, a link delay, a jitter, a packet loss rate, and a link utilization rate.

The method may further include that: the service transfer may be performed through a member link selected according to a priority.

The service transfer may be performed through a member link selected according to a priority by: configuring a correspondence between a service priority and a link quality factor, and transferring a service with a high service priority through a member link with a high link quality factor.

The method may further include: a link node may select a member link corresponding to a service priority of a service according to the correspondence between a service priority and a link quality factor, and forward the service through the selected member link.

A link aggregating device for traffic distribution may be a link node configured for: distributing traffic according to a link quality factor of a member link in a group of aggregated links by first selecting a member link with a high link quality factor for performing service transfer, and then after traffic on the member link with the high link quality factor reaches an upper limit, selecting a link with a link quality factor other than the high link quality factor for performing service transfer.

The device may be further configured for: receiving a configured link quality factor through an external command.

The device may be further configured for: selecting a member link for performing service transfer according to a descending order of link quality factors.

The device may be further configured for: receiving a performance indicator of a member link through an external command.

The device may be further configured for: computing a link quality factor according to the performance indicator, and then selecting a member link for performing service transfer according to a descending order of link quality factors,

The performance indicator may include at least one of a link type, a link rate, a link delay, a jitter, a packet loss rate, and a link utilization rate.

According to an embodiment herein, traffic may be distributed according to a link quality factor of a member link in a group of aggregated links by first selecting a member link with a high link quality factor for performing service transfer, and then after traffic on the member link with the high link quality factor reaches an upper limit, selecting a link with a link quality factor other than the high link quality factor for performing service transfer.

With an embodiment herein, as traffic is distributed according to a link quality factor, and a member link with a high link quality factor is preferred for performing service forwarding, such that a member link with a high link quality factor is fully used, thus improving quality of service transfer.

### BRIEF DESCRIPTION OF THE DRAWINGS

Fig.1 is a flowchart of implementing a method according to an embodiment herein.
Fig.2 is a schematic diagram of creating a group of aggregated links according to an embodiment herein.
Fig.3 is a scheduling flow of distributing traffic according to a link quality factor of a member according to an embodiment herein.

### DETAILED DESCRIPTION

In embodiments herein, traffic may be distributed according to a link quality factor of a member link in a group of aggregated links by first selecting a member link with a high link quality factor for performing service transfer, and then after traffic on the member link with the high link quality factor reaches an upper limit, selecting a link with a link quality factor other than the high link quality factor for performing service transfer.

A link aggregating method for traffic distribution mainly may include steps as follows.

First, a group of aggregated links may be created through network management; aggregation technology used by the group of aggregated links and a relate configuration parameter may be specified; and member links to be included in the group of aggregated links may be specified. The created group of aggregated links and the relate configuring parameter may be distributed to a device through an external command. The external command may be distributed through an interface between the network management and the device, or distributed as a command line. The device may refer to any link node in a network, which is not repeated below.

Here, aggregation may be performed using the LACP, the ML-PPP, the composite link, or the like.

According to aggregation technology adopted, a member link may be a link in an Optical Transport Network (OTN), An SDH-type link, an Ethernet-type link, and a physical link of another type, or may be a logic link or the like. An SDH-type link may be an E1 interface (which may be a 2.048M link coded by PCM), a Synchronous Transport Module level n (STM-N), an ATM-STM-N, or the like. An Ethernet-type link may be an FE link (which is a fast Ethernet link), a GE link (which is a Gigabit Ethernet link). A physical link of another type may be a digital subscriber line (XDSL) or a microwave. A logic link may be: an ML-PPP, a GenericRoutingEncapsulation (GRE) tunnel, a Label Switching Path (LSP) tunnel, or a Virtual Local Area Network (VLAN) interface.

Secondly, at the network management, it may be configured for the group of aggregated links whether service forwarding is performed according to the link quality factor of a member link. If so, a mode of computing a link quality factor may further be selected as automatically computing the link quality factor or manually configuring the link quality factor.
(1) A link quality factor may be used for link quality assessment. Depending on a service type and a subscriber need, an element deciding a link quality factor may include performance indicators such as: a link type, a link rate, a link delay, a jitter, a packet loss rate, a link utilization rate, or the like.
(2) A link quality factor may range between 1-N. N indicates the best link quality, and a link with a link quality factor N is to be selected first. 1 indicates the worst link quality, and a link with a link quality factor 1 should be avoided. Different links may have the same link quality factor. One link may be selected randomly from links with the same link quality factor for performing service forwarding.
(3) When manual link quality factor configuration is selected by the network management, the link quality factor of each link in the group of aggregated links may be configured statically and distributed to a device.
(4) when automatic link quality factor configuration is selected by the network management, a proportion of an indicator (the link type, the link rate, the link delay, the jitter, the packet loss rate, and a link utilization rate) impacting a link quality factor needs to be input. The proportion of each indicator may vary between 0-100%, and the sum of proportions of various indicators is 100%. After proportions of the indicators impacting the link quality factor are distributed to a device, the device may further need to compute automatically a base value for each indicator of each link. A product of multiplying the proportion of each indicator by the link base may be normalized to obtain a link quality factor of 1-N. The highest link quality factor indicates the best link quality, and the lowest link quality factor indicates the worst link quality. As a link indicator may vary dynamically, when the indicator varies, link quality factor re-computation needs to be triggered. Thus, a link quality factor may be kept synchronous with a real-time link state.
(5) After the network management selects to perform service forwarding according to a link quality factor, and a device obtains a link quality factor according to statically configuration or a dynamic algorithm, in service forwarding with the group of aggregated links, the device may select a member link with a high link quality factor for performing the forwarding; after traffic on the member link with the high link quality factor reaches an upper limit, the device may then select a link with a lower link quality factor for performing the forwarding. Thus, it is guaranteed that a high-quality link may be utilized fully, and at the same time use of a low-quality link for service transfer is avoided. Such a service forwarding mode is completely different from an existing load sharing mode, and is advantageous in case of a big link quality difference and below-capacity traffic.

Compared with related art, in an embodiment herein, a link quality factor is introduced and a member link with a high link quality factor is preferred for performing service forwarding, with beneficial effects as follows.

In an existing load sharing mode, traffic is distributed equally, regardless of link quality. However, in practice multiple member links of a group of aggregated links may differ. For example, some member links may have excellent quality, others, although available, may have not-so-good link delays or link quality. As prior art implements no link differentiation according to link quality, a high-quality link cannot be selected with a priority for service forwarding, a service is distributed equally to all links. Traffic is shared equally by a low-quality link even if a high-quality link is not used fully. Therefore, an actual load share does not match an actual link quality.

By contrast, with an embodiment herein, the link quality factor of a member link may be acquired, service forwarding may be performed first through a member link with a high link quality factor. After traffic on the member link with the high link quality factor reaches an upper limit, traffic may then be allocated to be delivered through a link with a link quality factor other than the high link quality factor. With an embodiment herein, load shares match actual link quality, such that a member link with a high link quality factor may be utilized fully.

Thirdly, combination of a service priority and the link quality factor of a link guarantees quality in transferring a service with a high service priority.

With related art, services with different priorities are forwarded in a randomly selected link. A link with poor link quality may be selected for a service with a high priority, which is disadvantageous for ensuring QoS of a service with a high service priority. With an embodiment herein, a service priority and the link quality factor of a link may be combined; a service with a high priority may be forwarded preferably through a member link with a high link quality factor corresponding to the high service priority; a service with a low priority may be forwarded preferably through a link with a low link quality factor corresponding to the low service priority, thus providing a service with a high priority with better QoS. An embodiment herein adopts prioritized link selection that differs from the random link selection in related art.

In addition, when a service with a high service priority and a service with a low priority are transferred through the same group of aggregated links, in related art, traffic of the services will be shared equally by each link in the group of aggregated links; while according to an embodiment herein, a link quality factor is introduced, all services will be transferred through a high-quality link, in which case, a service with a low priority will somehow impact a service with a high priority. To this end, an embodiment herein provides a solution for combining a service priority with a link quality factor. Combination of the service priority with the quality factor of a member link facilitates improving link stability of the group of aggregated links as well as providing better QoS for a service with a high priority, as elaborated below.
(1) For a group of aggregated links, the network management configures a link with a link quality factor selected for forwarding a service with a certain priority. When no such configuration exists, it means any link in the group of aggregated links may be selected. The configuration may be distributed to a device through the network management.
(2) According to an existing mode of Quality of Service (QOS), a device may allocate, for each group of aggregated links, a number of queues configured for: storing service packets of services of different priorities.
(3) A device may schedule to forward service packets in a queue of a group of aggregated links. When a service priority is not associated with a link quality factor, the service may be scheduled and forwarded in the general mode. When association of a service priority with a link quality factor is configured, a device may schedule and forward a service packet through a member link corresponding to the service priority. For example, a link with a link quality factor of N may be selected for forwarding a service with a top priority, a link with a link quality factor of 1∼(N-1) may be selected for forwarding a service with a priority other than the top priority. In such a mode, it is guaranteed that a service with a high priority is isolated from a service with a low priority in a forwarding plane, reducing impact of a service with a low priority on a service with a high service priority.

To sum up, with an embodiment herein, the link quality factor of a link is computed by recognizing different performance indicators (such as a link type, a link rate, a link delay, a jitter, a packet loss rate, and a link utilization rate) of a link member in a group of aggregated links. Introduction of a link quality factor guarantees that a high-quality link in a group of aggregated links is utilized fully, thus improving QoS of the group of aggregated links. In addition, by combining a service priority with a link quality factor, QoS of a service with a high service priority may be guaranteed further.

A link aggregating device for traffic distribution, which may be a link node, is configured for: distributing traffic according to a link quality factor of a member link in a group of aggregated links by first selecting a member link with a high link quality factor for performing service transfer, and then after traffic on the member link with the high link quality factor reaches an upper limit, selecting a link with a link quality factor other than the high link quality factor for performing service transfer.

The device may be further configured for: receiving a configured link quality factor through an external command.

The device may be further configured for: selecting a member link for performing service transfer according to a descending order of link quality factors.

The device may be further configured for: receiving a performance indicator of a member link through an external command.

The device may be further configured for: computing a link quality factor according to the performance indicator, and then selecting a member link for performing service transfer according to a descending order of link quality factors.

The performance indicator may include at least one of a link type, a link rate, a link delay, a jitter, a packet loss rate, and a link utilization rate.

Implementation of a technology solution may be further elaborated below with reference to the drawings.

Embodiment: distributing traffic according to a link quality factor.

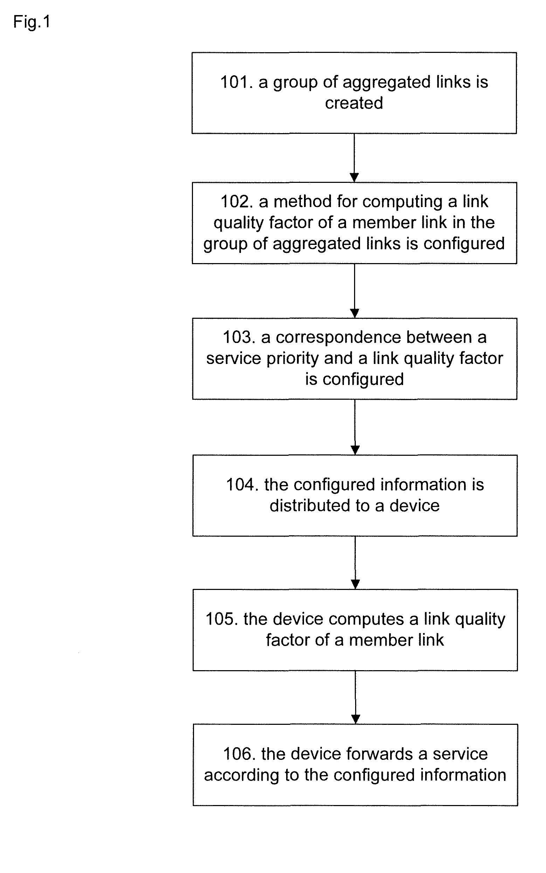

Fig.1 is a flowchart of implementing a link aggregating method for distributing traffic according to a link quality factor according to an embodiment herein. The method may include steps as follows.

In step 101, a group of aggregated links is created.

In step 102, a method for computing a link quality factor of a member link in the group of aggregated links is configured.

In step 103, a correspondence between a service priority and a link quality factor is configured.

In step 104, any information configured in step 101∼step 103 is distributed to a device.

In step 105, the device computes a link quality factor of a member link.

In step 106, the device forwards a service according to the configured information.

Here, when no link quality factor is used, existing link aggregation may be adopted.

Example: creating a group of aggregated links.

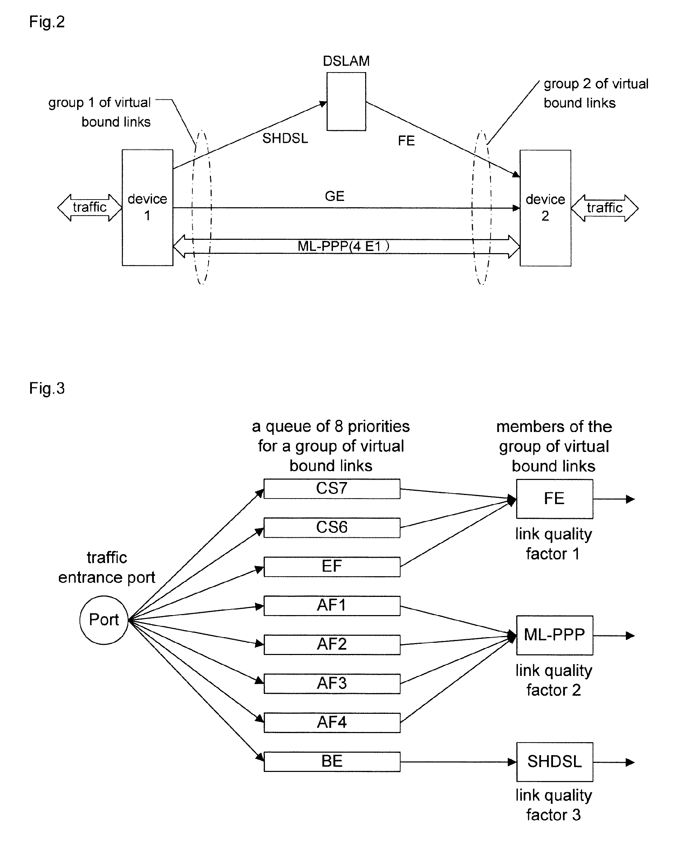

Fig.2 is a schematic diagram of creating a group of aggregated links. Adopted here is aggregation of a "composite link ", which is a group of virtual bound links. Created for device 1 is a composite link 1, including 1 GE link, an ML-PPP link, and an SHDSL link. Created for device 2 is a composite link 2, including 1 GE link, an ML-PPP link, and an FE link.

Here, the link quality factor of a member link in a composite link is configured manually, link quality factors at the two end devices are configured symmetrically. For composite link 1 of device 1, the link quality factor of the GE link may be configured as 3; the link quality factor of the ML-PPP link may be configured as 2; the link quality factor of the SHDSL link may be configured as 1. For composite link 2 of device 2, the link quality factor of the GE link may be configured as 3; the link quality factor of the ML-PPP link may be configured as 2; and the link quality factor of the FE link may be configured as 1. A link quality factor of 3 indicates the best link quality. A link quality factor of 1 indicates the worst link quality.

Here, Fig.3 is a scheduling flow of distributing traffic according to different link quality factors. Used for a composite link are 8 priority queues, each corresponding to a service of a priority of CS7, CS6, EF,AF1, AF2, AF3, AF4, or BE.

A subscriber may configure, through the network management, association between a service priority and a link quality factor of a group of aggregated links. Namely, CS7, CS6, EF are designated to use a link with a link quality factor of 3; AF1, AF2, AF3, AF4 may be specified to use a link with a link quality factor of 2; a BE service may be specified to use a link with a link quality factor of 1.
according to a subscriber configured link quality factor as in Fig.2 and scheduling mode configured as in Fig.3, when device 1 performs service forwarding, a service with a high priority (CS7, CS6, EF) may be forwarded through the GE link with the best link quality; AF1, AF2, AF3, AF4 may be forwarded through the M-PPP link with mediate link quality. A BE service may be forwarded through the SHDSL link that is less stable.

It may be seen that in the example, link aggregation is implemented using a composite link; the link quality factor of a member link may be configured statically according to a link type; and by using links of different quality factors for services of different priorities, QoS may be guaranteed indeed from top to bottom.

What described are merely embodiments of the disclosure and are not intended to limit the scope of the disclosure.

### Industrial Applicability

According to an embodiment herein, traffic may be distributed according to a link quality factor of a member link in a group of aggregated links by first selecting a member link with a high link quality factor for performing service transfer, and then after traffic on the member link with the high link quality factor reaches an upper limit, selecting a link with a link quality factor other than the high link quality factor for performing service transfer. With an embodiment herein, as traffic is distributed according to a link quality factor, and a member link with a high link quality factor is preferred for performing service forwarding, such that a member link with a high link quality factor is fully used, thus improving quality of service transfer.

## Claims

1. A link aggregating method for traffic distribution, comprising: distributing traffic according to a link quality factor of a member link in a group of aggregated links by first selecting a member link with a high link quality factor for performing service transfer, and then after traffic on the member link with the high link quality factor reaches an upper limit, selecting a link with a link quality factor other than the high link quality factor for performing service transfer.

2. The method according to claim 1, further comprising: before distributing traffic according to a link quality factor of a member link in a group of aggregated links,
creating the group of aggregated links, designating member links comprised in the group of aggregated links, and configuring a link quality factor of a member link statically or dynamically.

3. The method according to claim 2, further comprising: when a link quality factor of a member link is configured statically, receiving, by a link node, the configured link quality factor through an external command.

4. The method according to claim 3, further comprising: selecting, by the link node, a member link for performing service transfer according to a descending order of link quality factors of the member links.

5. The method according to claim 2, further comprising: when a link quality factor of a member link is to be configured dynamically, receiving, by a link node, a performance indicator of the member link through an external command.

6. The method according to claim 5, further comprising: computing, by the link node, the link quality factor according to the performance indicator, and then selecting a member link for performing service transfer according to a descending order of link quality factors,
wherein the performance indicator comprises at least one of a link type, a link rate, a link delay, a jitter, a packet loss rate, and a link utilization rate.

7. The method according to any of claims 2 to 6, further comprising: performing the service transfer through a member link selected according to a priority.

8. The method according to claim 7, wherein performing the service transfer through a member link selected according to a priority comprises: configuring a correspondence between a service priority and a link quality factor, and transferring a service with a high service priority through a member link with a high link quality factor.

9. The method according to claim 8, further comprising: selecting, by a link node, a member link corresponding to a service priority of a service according to the correspondence between a service priority and a link quality factor, and forwarding the service through the selected member link.

10. A link aggregating device for traffic distribution, the device being a link node configured for: distributing traffic according to a link quality factor of a member link in a group of aggregated links by first selecting a member link with a high link quality factor for performing service transfer, and then after traffic on the member link with the high link quality factor reaches an upper limit, selecting a link with a link quality factor other than the high link quality factor for performing service transfer.

11. The device according to claim 10, further configured for: receiving a configured link quality factor through an external command.

12. The device according to claim 11, further configured for: selecting a member link for performing service transfer according to a descending order of link quality factors.

13. The device according to claim 10, further configured for: receiving a performance indicator of a member link through an external command.

14. The device according to claim 13, further configured for: computing a link quality factor according to the performance indicator, and then selecting a member link for performing service transfer according to a descending order of link quality factors,
wherein the performance indicator comprises at least one of a link type, a link rate, a link delay, a jitter, a packet loss rate, and a link utilization rate.
